# EUROPÄISCHE PATENTSCHRIFT

(11) **EP 1 674 356 B1**
(45) Veröffentlichungstag und Bekanntmachung des Hinweises auf die Patenterteilung: **22.01.2014**
(21) Anmeldenummer: 05111901.4
(22) Anmeldetag: 09.12.2005
(51) Int. Cl.: B60S 1/08

(54) **Verfahren und Vorrichtung zur kombinierten Auswertung der Signale eines Regensensors und einer Kamera**
Method and device for a combined signal evaluation of a rain sensor and a camera
Procédé et dispositif pour l'évaluation combinée des signaux d'un capteur de pluie et d'une caméra

(30) Priorität: 22.12.2004 DE 102004061831
(43) Veröffentlichungstag der Anmeldung: 28.06.2006
(73) Patentinhaber: Hella KGaA Hueck & Co., 59552 Lippstadt (DE)
(72) Erfinder: Kaphingst, Jens, 54510, Lippetal (DE); Mühlenberg, Martin, 59494, Soest (DE); Boehlau, Christian, 33397, Rietberg (DE)

(56) Entgegenhaltungen:
- WO-A-03/080390
- WO-A-03/097420
- WO-A-2004/007255
- WO-A-2004/070449
- WO-A-2005/039957

## Beschreibung

Die Erfindung betrifft ein Verfahren zur kombinierten Auswertung der Signale eines Regensensors und einer Kamera gemäß dem Oberbegriff des Anspruchs 1 sowie eine Vorrichtung zur Durchführung des Verfahrens.

Regensensoren sind bekannt und werden in Kraftfahrzeugen eingesetzt, um z.B. Scheibenwischer automatisch einzuschalten. Die Regensensoren werden auch als Regenlichtsensoren ausgebildet, um zusätzlich die Beleuchtung anzusteuern. Fehlfunktionen der bekannten Systeme sind nicht auszuschließen.

Kameras sind für Kraftfahrzeuge ebenfalls bekannt und werden für Fahrerassistenzsysteme eingesetzt, um z.B. ein Abdriften aus oder Hindernisse in einer Fahrspur zu detektieren und den Fahrer hiervor zu warnen (LDW, Lane Departure Warning). Je nach Beleuchtungs- und Witterungssituation werden keine optimalen Erkennungsraten erreicht.

Die WO 03/080390 A beschreibt ein Kraftfahrzeug mit einem Spurwechselassistenz-System, das zum Ermitteln einer Mindestbeschleunigung zum Einfahren in eine ermittelte Lücke ausgebildet ist und das dem Fahrer beim Beschleunigen entsprechende haptische Signale übermittelt. Eine Steuerung von Scheibenwischern ist nicht beschrieben.

Die DE 102 37 481 A1 beschreibt eine Kameraanordnung für Kraftfahrzeuge, die in einem Fahrzeuginnenraum an einer Scheibe angeordnet ist. Die Kamera ist auf einer Trägerplatte befestigt, an der gleichzeitig mindestens ein optisches Führungselement, z.B. ein Regensensor angeordnet ist. Zwar sind Kamera und Regensensor baulich zusammen auf einer gemeinsamen Trägerplatte angeordnet, sie sind aber nicht funktional miteinander verbunden.

Aus der DE 103 16 794 A1 ist ein Regensensor bekannt, bei dem eine Kamera, die Bestandteil eines Fahrerassistenzsystems ist, und eine zugehörige Bildverarbeitungseinheit auf ein fahrzeugfestes Objekt vor einer Windschutzscheibe gerichtet ist. Die Bildverarbeitungseinheit vergleicht ein aktuelles Bild mit einem bei trockener Windschutzscheibe aufgenommenem Bild, das gespeichert ist. Anhand von festgestellten Abweichungen zwischen den Bildern wird Feuchtigkeit auf der Windschutzscheibe erkannt und eingestuft. Nachteil dieses bekannten Regensensors ist, dass er nicht immer eindeutige Ergebnisse für Tropfen auf der Windschutzscheibe liefert. Denn das System setzt voraus, dass das fahrzeugfeste Objekt unter allen auftretenden Umgebungsbedingungen erkannt werden muss.

Aufgabe der Erfindung ist es, die Funktionalität sowohl eines Regensensors als auch die eines Fahrerassistenzsystems zu optimieren.

Die Aufgabe ist durch die Merkmale des Anspruchs 1 gelöst. Dadurch dass alle Signale des Regensensors und der Kamera derart funktional gekoppelt sind, dass die Signale des einen zusätzlich die Funktionen des anderen unterstützen und verbessern, werden Fehlschaltungen des Scheibenwischers und falsche Warnungen des LDW vermieden. Es werden synergistische Wirkungen erzielt, die von den bekannten einzelnen Vorrichtungen nicht erreicht werden können. Das bedeutet, dass der von den Signalen der Kamera beeinflusste Regensensor eine wesentlich bessere Steuerung der Scheibenwischer bewirken kann als der Regensensor an sich. Es sind z.B. vorausschauende Maßnahmen möglich, die den Fahrer stark entlasten und helfen, gefährliche Situationen infolge z.B. schlechter Sicht oder Schreckmomente durch Fehlwarnungen zu vermeiden.

Entsprechendes gilt für die Vorrichtung nach Anspruch 10.

Die Unteransprüche betreffen die vorteilhafte Ausgestaltung der Erfindung.

Die Nutzung der Signale der Kamera, die als Bilder gespeichert und ausgewertet werden, als Zusatzsignal für die Steuerung der Scheibenwischer gemäß Anspruch 2 erlaubt es, hierfür Signale zu nutzen, die von dem Regensensor nicht erfassbar sind.

Wenn gemäß Anspruch 3 bei positivem Regensignal und plötzlichem Kanten- und/oder Konturverlust der Bilder das Zusatzsignal für einen zu erwartenden Wasserschwall auf der Windschutzscheibe auf die Steuerung aufgeschaltet wird, können die Scheibenwischer so frühzeitig eingeschaltet oder in eine höhere Wischfrequenz geschaltet werden, dass ständig die bestmögliche Sicht gewährleistet ist.

Wenn gemäß Anspruch 4 bei positivem Regensignal und Erkennen eines vorausfahrenden und/oder entgegenkommenden Fahrzeugs das Zusatzsignal für einen zu erwartenden Wasserschwall auf der Windschutzscheibe auf die Steuerung aufgeschaltet wird, können die Scheibenwischer in Abhängigkeit vom Verkehr und den hieraus zu erwartenden Gischtfahnen bedarfsgerecht geschaltet werden.

Dies kann durch die Berechnung der Stärke des Wasserschwalls aus Regenstärke, gefahrener Geschwindigkeit und gespeicherten Daten nach Anspruch 5 weiter optimiert werden.

Die Aufschaltung der Signale des Regensensors als Zusatzsignal auf die aus den Signalen der Kamera erzeugten Bilder nach den Ansprüchen 6 bis 8 erlaubt die automatische Zuordnung von Signalen zu wirklichkeitsnahen Situationen.

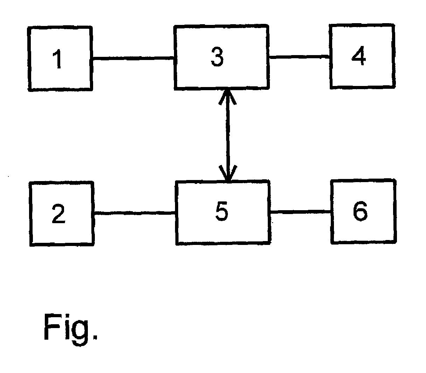

Die Erfindung wird anhand eines vereinfacht dargestellten Ausführungsbeispiels weiter erläutert. Die einzige Figur zeigt schematisch eine Kamera- und Rergensensoranordnung mit zugehörigen Auswerteeinheiten.

Wie aus der Figur ersichtlich sind eine Kamera 1 und ein Regensensor 2 oder Regen- Lichtsensor, die an sich bereits bekannt sind, im Inneren eines Fahrzeugs auf übliche Weise an einer Windschutzscheibe befestigt. Die Tiefenschärfe der Kamera 1 ist auf einen Bereich ab 2 m vor dem Fahrzeug eingestellt; der Regensensor 2 erfasst prinzipbedingt die von ihm abgedeckte Fläche der Windschutzscheibe.

Der Kamera 1 ist eine erste Signalverarbeitungsvorrichtung 3 zugeordnet, in der die Signale der Kamera 1 in z.B. Bilder verarbeitet werden. Zur Erzielung einer optimalen Bildsignalverarbeitung werden die Signale und/oder die Signalverarbeitung der Kamera 1 in der ersten Signalverarbeitungsvorrichtung 3 um Korrekturwerte für z.B. Umgebungstemperatur, Witterungsbedingungen und/oder Lichtverhältnisse verändert. Die Bilder werden dann in einer Auswertevorrichtung 4 weiter verarbeitet und z.B. bei einem Abweichen des Fahrzeugs von einer Fahrspur als Warnsignal ausgegeben (LDW).

Dem Regensensor 2 ist eine zweite Signalverarbeitungsvorrichtung 5 zugeordnet, in der die Signale des Regensensors 2 für die weitere Verarbeitung aufbereitet werden. Diese aufbereiteten Signale werden in einer Steuervorrichtung 6 für Schaltvorgänge von Scheibenwischern genutzt. Die Scheibenwischer werden bei positivem Signal des Regensensors 2 eingeschaltet, wobei Wischintervall und Wischgeschwindigkeit in Abhängigkeit von der Signalstärke gesteuert werden. Bei negativem Signal werden die Scheibenwischer ausgeschaltet.

Gemäß der Erfindung werden die Signale der Kamera 1 auch für die Steuerung der Scheibenwischer genutzt, indem sie nach einer Aufbereitung der zweiten Signalverarbeitubgsvorrichtung aufgeschaltet werden. Weiterhin werden die Signale des Regensensors 2 in der ersten Signalverarbeitungsvorrichtung 3 genutzt.

Wenn die Kamera 1 einen plötzlichen Kanten- und/oder Konturverlust im Bild feststellt, das heißt, das Bild verschwimmt und wird unscharf, dann kann bei gleichzeitig positivem Signal des Regensensors 2 darauf geschlossen werden, dass ein Wasserschwall auf der Windschutzscheibe zu erwarten ist. Denn normale Fahrumgebungen und Bildhintergründe an sich ändern sich bezüglich ihrer Kanten und Konturen nicht plötzlich und weisen immer einen minimalen Inhalt an Kanten und Konturen auf. Die plötzlichen Änderungen treten auf, wenn z.B. ein anderes Fahrzeug überholt wird oder entgegen kommt. Solche Situationen sind mit Hilfe der Kamera 1 und der ersten Signalverarbeitungsvorrichtung 3 einfach zu erfassen und zu verfolgen. Im Regenfall wird bei plötzlichem Kanten- und Konturverlust auf eine von einem anderen Fahrzeug erzeugte Wasserfahne geschlossen und ein Wischvorgang vorausschauend so eingeleitet oder verändert, dass kurz vor dem erwarteten Auftreffen des Wasserschwalls auf der Windschutzscheibe das Wischen einsetzt (bei Schaltung "Intervall- Wischen") oder beschleunigt wird. Dadurch dass hierfür ausgewertete Signale aus der ersten Signalverarbeitungsvorrichtung 3 auf die zweite Signalverarbeitungsvorrichtung 5 aufgeschaltet werden, sind Fehlschaltungen praktisch ausgeschlossen.

Eine zusätzliche Unterstützung der Schwallerkennung ist durch einen ACC-Sensor möglich, indem von diesem ein zusätzliches Signal auf die zweite Signalverarbeitungsvorrichtung 5 aufgeschaltet wird.

Änderungen der Kanten und Konturen werden im Regenfall kontinuierlich auf plötzliche Änderungen analysiert, indem hochfrequente Bildanteile, die Kanten darstellen, durch die erste Signalverarbeitungsvorrichtung 3 ausgewertet werden. Hierfür werden z.B. Schwellwertanalysen im Ortsfrequenzbereich oder Kantenfindungsverfahren im Ortsbereich oder Faltungen mit angepassten Masken eingesetzt. Ausbildung und Größe der von dem anderen Fahrzeug erzeugten Wasserfahne werden auf der Grundlage von Messungen, statischen Werten, gefahrenen Geschwindigkeiten und der vom Regensensor 2 festgestellten Regenstärke ermittelt, wobei die ermittelten Größen zumindest teilweise gespeichert werden können.

Als weiterer Teil der Erfindung werden die Signale des Regensensors 2 auf die erste Signalverarbeitungsvorrichtung 3 aufgeschaltet, um die Bildverarbeitung und die Einstellungen eines Bildsensors der Kamera 1 an die aktuelle Wettersituation anzupassen. So werden z.B. Kantenoperatoren der Bildverarbeitung, Vorausschauentfernung und Belichtungssteuerung des Bildsensors bei positivem Signal des Regensensors 2 entsprechend korrigiert. Alternativ oder zusätzlich wird die Bildverarbeitungs- Methodik an die Wettersituation angepasst werden, so dass z.B. bei Trockenheit Fahrbahnmarkierungen und bei Regen ein Übergang Fahrbahnbefestigung /unbefestigter Randbereich erfasst wird. Bei sehr starkem Regen kann die Kamera deaktiviert werden. Im Fall eines Regen- Lichtsensors und/oder eines Umfeld- und Vorfeldhelligkeitssensors werden zusätzlich die Lichtverhältnisse als Signal auf die erste Signalverarbeitungsvorrichtung 3 aufgeschaltet, um den Bildsensor und/oder die Funktion der ersten Signalverarbeitungsvorrichtung 3 zu optimieren.

## Patentansprüche

1. Verfahren zur Auswertung von Signalen mindestens eines Regensensors (2) und mindestens einer Kamera (1),
wobei die Signale jedes Regensensors (2) in einer zweiten Signalverarbeitungsvorrichtung (5) aufbereitet werden, um mindestens einen Scheibenwischer automatisch zu steuern,
und wobei die Signale jeder Kamera (1), deren Tiefenschärfe auf einen Bereich ab zwei Meter vor einem Fahrzeug eingestellt ist, in einer ersten Signalverarbeitungsvorrichtung (3) verarbeitet werden, um Fahrerassistenzsysteme zu steuern,
**dadurch gekennzeichnet, dass** die Signale der Kamera (1) zusätzlich für die Steuerung der Scheibenwischer genutzt werden, indem sie nach der Verarbeitung der zweiten Signalverarbeitungsvorrichtung (5) aufgeschaltet werden
und dass die Signale des Regensensors (2) zusätzlich in der ersten Signalverarbeitungsvorrichtung (3) genutzt werden.

2. Verfahren nach Anspruch 1, **dadurch gekennzeichnet, dass** die ausgewerteten Signale der Kamera (1) als Bilder in der ersten Signalverarbeitungsvorrichtung (3) gespeichert sowie ausgewertet und dann als Zusatzsignal für die Steuerung des Scheibenwischers genutzt werden.

3. Verfahren nach Anspruch 2, **dadurch gekennzeichnet, dass** bei einem positiven Signal des Regensensors (2) und plötzlichem Kanten- und/oder Konturverlust der Bilder das Zusatzsignal für einen zu erwartenden Wasserschwall auf der Windschutzscheibe auf die Steuerung aufgeschaltet wird.

4. Verfahren nach Anspruch 2, **dadurch gekennzeichnet, dass** bei einem positiven Signal des Regensensors (2) und Erkennen eines vorausfahrenden und/oder entgegenkommenden Fahrzeugs das Zusatzsignal für einen zu erwartenden Wasserschwall auf der Windschutzscheibe auf die Steuerung aufgeschaltet wird.

5. Verfahren nach Anspruch 4, **dadurch gekennzeichnet, dass** die Stärke des Wasserschwalls aus Regenstärke, gefahrener Geschwindigkeit und gespeicherten Daten berechnet wird.

6. Verfahren nach Anspruch 1, **dadurch gekennzeichnet, dass** die ausgewerteten Signale des Regensensors (2) als Zusatzsignal auf die aus den Signalen der Kamera (1) erzeugten Bilder aufgeschaltet wird.

7. Verfahren nach Anspruch 6, **dadurch gekennzeichnet, dass** die ausgewerteten Signale des Regensensors (2) auf Einstellparameter eines Bildsensors wirken.

8. Verfahren nach Anspruch 6, **dadurch gekennzeichnet, dass** die ausgewerteten Signale des Regensensors (2) auf eine Bildverarbeitungsmethodik wirken.

9. Verfahren nach einem der Ansprüche 1 bis 8, **dadurch gekennzeichnet, dass** zusätzlich Lichtverhältnisse als Signal auf die erste Signalverarbeitungsvorrichtung (3) aufgeschaltet werden.

10. Vorrichtung umfassend mindestens einen Regensensor (2) und mindestens eine Kamera (1), deren Tiefenschärfe auf einen Bereich ab zwei Meter vor einem Fahrzeug eingestellt ist,
wobei der Regensensor (2) mit einer zweiten Signalverarbeitungsvorrichtung (5) und einer Steuervorrichtung (6) für mindestens einen Scheibenwischer und die Kamera (1) mit einer ersten Signalverarbeitungsvorrichtung (3) für mindestens eine Auswertevorrichtung (4) verbunden sind,
**dadurch gekennzeichnet, dass** die Signale der Kamera (1) zusätzlich für die Steuerung der Scheibenwischer genutzt sind, indem sie nach der Verarbeitung der zweiten Signalverarbeitungsvorrichtung (5) aufgeschaltet sind,
und dass die Signale des Regensensors (2) zusätzlich der ersten Signalverarbeitungsvorrichtung (3) aufgeschaltet sind.

11. Vorrichtung nach Anspruch 9, **dadurch gekennzeichnet, dass** die Auswertevorrichtung (4) ein Fahrerassistenzsystem ist, insbesondere ein Lane Departure Waming.

## Claims

1. Procedure for the analysis of signals of at least one rain sensor (2) and at least one camera (1),
wherein the signals of each rain sensor (2) are processed in a second signal processing device (5) to automatically control at least one windscreen wiper,
and wherein the signals of each camera (1), whose depth of field is adjusted to a range ranging from 2 meters in front of a vehicle, are processed in a first signal processing device (3) to control driver assistance systems,
**characterized in that** the signals of the camera (1) are used for the control of the windscreen wipers in addition by feeding them into the second signal processing device (5) after processing and that the signals of the rain sensor (2) are used in the first signal processing device (3) in addition.

2. Procedure according to Claim 1, **characterized in that** the analyzed signals of the camera (1) are stored and analyzed as images in the first signal processing device (3) and then used as an additional signal for the control of the windscreen wiper.

3. Procedure according to Claim 2, **characterized in that** in case of a positive signal of the rain sensor (2) and a possible edge and/or contour loss of the images, the additional signal for a gush of water to be expected on the windscreen is fed into the control.

4. Procedure according to Claim 2, **characterized in that** in case of a positive signal of the rain sensor (2) and the recognition of a vehicle driving ahead or an oncoming vehicle, the additional signal for a gush of water to be expected on the windscreen is fed into the control.

5. Procedure according to Claim 4, **characterized in that** the power of the gush of water is calculated from rainfall intensity, driven speed and stored data.

6. Procedure according to Claim 1, **characterized in that** the analyzed signals of the rains sensor (2) are added to the images generated from the signals of the camera (1) as an additional signal.

7. Procedure according to Claim 6, **characterized in that** the analyzed signals of the rain sensor (2) influence the setting parameters of an image sensor.

8. Procedure according to Claim 6, **characterized in that** the analyzed signals of the rain sensor (2) influence an image processing methodology.

9. Procedure according to one of the Claims 1 to 8, **characterized in that** lighting conditions are fed into the first signal processing device (3) as an additional signal.

10. Device comprising at least one rain sensor (2) and at least one camera (1), whose depth of field is adjusted to a range ranging from 2 meters in front of a vehicle,
wherein the rain sensor (2) is connected to a second signal processing device (5) and a control device (6) for at least one windscreen wiper, and the camera (1) is connected to a first signal processing device (3) for at least one evaluation device (4),
**characterized in that** the signals of the camera (1) are used for the control of the windscreen wipers in addition by feeding them into the second signal processing device (5) after processing,
and that the signals of the rain sensor (2) are fed into the first signal processing device (3) in addition.

11. Device according to Claim 9, **characterized in that** the evaluation device (4) is a driver assistance system, and in particular a Lane Departure Warning device.

## Revendications

1. Procédé pour l'exploitation des signaux d'au moins un capteur de pluie (2) et d'au moins une caméra (1),
les signaux de chaque capteur de pluie (2) étant traités par un deuxième dispositif de traitement des signaux (5) pour commander au moins un essuie-vitre automatiquement,
et les signaux de chaque caméra (1) dont la profondeur de champ est réglée à une zone à partir de deux mètres devant un véhicule, étant traités par un premier dispositif de traitement des signaux (3) pour commander des systèmes d'assistance à la conduite,
**caractérisé en ce que**
les signaux de la caméra (1) sont utilisés additionnellement pour la commande des essuie-vitres en les ajoutant au deuxième dispositif de traitement des signaux (5) après le traitement et que les signaux du capteur de pluie (2) sont utilisés additionnellement dans le premier dispositif de traitement des signaux (3).

2. Procédé selon la revendication 1, **caractérisé en ce que** les signaux exploités de la caméra (1) sont mémorisés en tant qu'images au premier dispositif de traitement des signaux (3) et exploités et puis utilisés en tant que signal supplémentaire pour la commande de l'essuie-vitre.

3. Procédé selon la revendication 2, **caractérisé en ce que** lors d'un signal positif du capteur de pluie (2) et d'une perte brusque de l'arête et/ou du contour des images le signal supplémentaire est ajouté à la commande pour une giclée d'eau à attendre sur le pare-brise.

4. Procédé selon la revendication 2, **caractérisé en ce que** lors d'un signal positif du capteur de pluie (2) et de l'identification d'un véhicule qui précède et/ou qui va en sens inverse le signal supplémentaire est ajouté à la commande pour une giclée d'eau à attendre sur le pare-brise.

5. Procédé selon la revendications 4, **caractérisé en ce que** l'intensité de la giclée d'eau est calculée à partir de l'intensité de la pluie, de la vitesse de marche et des données mémorisées.

6. Procédé selon la revendication 1, **caractérisé en ce que** les signaux exploités du capteur de pluie (2) sont ajoutés aux images engendrées par les signaux de la caméra (1) en tant que signal supplémentaire.

7. Procédé selon la revendication 6, **caractérisé en ce que** les signaux exploités du capteur de pluie (2) font effet sur les paramètres de réglage d'un capteur d'images.

8. Procédé selon la revendication 6, **caractérisé en ce que** les signaux exploités du capteur de pluie (2) font effet sur une méthode de traitement des images.

9. Procédé selon l'une des revendications 1 à 8, **caractérisé en ce que** des conditions d'éclairage supplémentaires sont ajoutées en tant que signal au premier dispositif de traitement des signaux (3).

10. Dispositif contenant au moins un capteur de pluie (2) et au moins une caméra (1) dont la profondeur de champ est réglée à une zone à partir de deux mètres devant un véhicule,
le capteur de pluie (2) étant relié à un deuxième dispositif de traitement des signaux (5) et à un dispositif de commande (6) pour au moins un essuie-vitre et la caméra (1) étant reliée à un premier dispositif de traitement des signaux (3) pour au moins un dispositif d'exploitation (4),
**caractérisé en ce que**
les signaux de la caméra (1) sont utilisés additionnellement pour la commande des essuie-vitres en les ajoutant au deuxième dispositif de traitement des signaux (5) après le traitement et que les signaux du capteur de pluie (2) sont ajoutés additionnellement au premier dispositif de traitement des signaux (3).

11. Dispositif selon la revendication 9, **caractérisé en ce que** le dispositif d'exploitation (4) est un système d'assistance à la conduite, surtout un système d'avertissement de sortie de voie (Lane Departure Warning System)
